# EUROPEAN PATENT APPLICATION

(11) **EP 2 562 562 A1**
(43) Date of publication of application: **27.02.2013**
(21) Application number: 11461535.4
(22) Date of filing: 24.08.2011
(51) Int. Cl.: G01T 1/26

(54) **A radiation detector and a method for producing a metal-carbon junction for a radiation detector**

(71) Applicant: Instytut Fizyki Jadrowej Pan Im. Henryka Niewodniczanskiego, 31-342 Kraków (PL)
(72) Inventor: Jaworski, Jacek Andrzej, 31-924 Krakow (PL); Fleury, Eric, Seul (KR); Kac, Malgorzata, 30-348 Krakow (PL); Mitura-Nowak, Marzena, 32-065 Nawojowa Gora (PL); Swiatkowska-Warkocka, Zaneta, 30-720 Krakow (PL)
(74) Representative: Pawlowski, Adam

(57) **Abstract**

A radiation detector comprising a metal-carbon junction wherein a layer of carbon (11) is deposited on a layer of metal (12) having a work function higher than the work function of carbon (11), the junction having electrical characteristic of a diode.

## Description

The invention relates to a radiation detector and a method for producing a metal-carbon junction for a radiation detector, applicable in particular for detecting UV, Gamma and/or X radiation.

Radiation detectors can be classified as either active or passive. Active detectors require a power supply, while passive detectors do not.

The known passive detector types include photographic emulsion, Roentgen plate or chemical detectors. Such detectors are applicable for detecting or measuring a strong radiation, especially in locations that are difficult to reach, such as locations in outer space or nuclear reactors. They are disposable after a single use.

The known active detector types include gaseous detectors, semiconductor detectors and scintillation counters. Such detectors require an external power supply. Furthermore, gaseous detectors are large and need polarization voltage, the semiconductor detectors need polarization voltage as well, and the scintillation counters require a photomultiplier.

Radiation detectors can be used in solar cells to generate electric energy. The typical solar cells are configured to detect visible light radiation and are based on Si, Ti02, GaAs, CdTe, CulnSe2. Production of such cells is relatively expensive.

The aim of the present invention is to present an improved passive detector for UV, Gamma and/or X radiation.

The object of the invention is a radiation detector comprising a metal-carbon junction wherein a layer of carbon is deposited on a layer of metal having a work function higher than the work function of carbon, the junction having electrical characteristic of a diode.

The thickness of the layer of carbon can be from 100 nm to 300 nm.

The layer of carbon can be deposited on the layer of metal by Chemical Vapor Deposition (CVD) method.

The object of the invention is also a photosensitive system comprising a plurality of detectors according to the invention.

The object of the invention is also a method for producing a metal-carbon junction for a radiation detector by depositing a layer of carbon on a layer of metal having a work function higher than the work function of carbon by Chemical Vapor Deposition (CVD) to obtain a junction having electrical characteristic of a diode.

A mixture of hydrogen and methane as reactants can be used for the CVD deposition.

At the beginning of the deposition the surface temperature of the metal layer can be in a range from 15°C to 100°C.

The object of the invention is shown by means of exemplary embodiment on a drawing, in which:
Fig. 1 presents a detector comprising a metal-carbon junction according to the invention,
Fig. 2 presents the dependence of photoelectric effect measured on an open circuit with respect to the angle of incidence of the X radiation versus the surface of the carbon layer,
Fig. 3 shows a photosensitive system comprising UV and/or Gamma and/or X radiation detector.

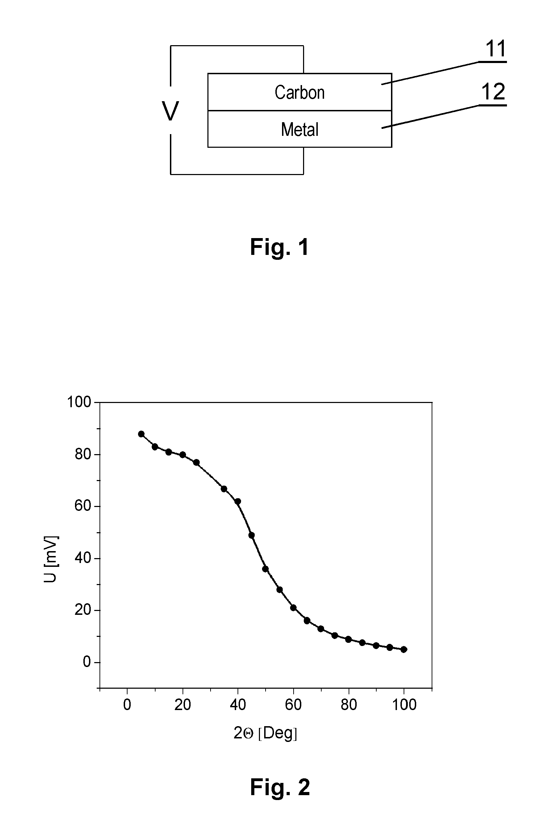

The detector according to the present invention comprises a metal-carbon junction, as shown in Fig. 1, comprising a carbon layer 11 deposited on a metal layer 12, wherein the metal has a higher work function than the carbon. The work function is defined as the minimum energy needed to remove an electron from a solid to a point immediately outside the solid surface. The junction has electrical characteristic of a Schottky diode.

The work function of carbon is typically 5 electron volts (eV). However, carbon layers may have a wider range of work functions. Abbott (see P. Abbott, E. D. Sosa, D. E. Golden, Appl. Phys. Lett. 79 (2001) pp. 2835-2837) disclosed covering Molybdenum with diamond, wherein the diamond, depending on its grain size, shows different work function values within the range of 3,2 to 5,1 eV

The metals that are applicable for the detector according to the invention are e.g. Platinum (with the work function of 5,65 eV), Iridium (5,27 eV), Nickel (5,04 to 5,35 eV), Cobalt (5 eV). Preferably, the less costly and better affordable metals are used, such as Nickel or Cobalt.

The sensitivity of the detector to particular radiation wavelength depends on the band gap of the carbon layer. The band gap is defined as an energy range in a solid where no electron states can exist. It defines the energy difference between the top of the valence band and the bottom of the conduction band.

The band gap for carbon depends on its structure and may range from close to 0 eV for graphite to 5,5 eV for diamond. For amorphous carbon obtained by means of Chemical Vapor Deposition (CVD) method, the band gap is approximately 4 eV (see S. Adhikari, H. R. Aryal, D. Ch. Ghimire, G. Kalita, M. Umeno Diamond & Related Materials, 17 (2008) pp. 1666-1668, Reo KOMETANI, Yuichi HARUYAMA, Kazuhiro KANDA, Takashi KAITO, Shinji MATSUI, Japanese Journal of Applied Physics, 46, 2007, pp. 7987-7990).

The greater the band gap, the more photon energy is required in order to move an electron from the valence band to the conduction band. Therefore, the responsiveness of the detector of the invention can be adapted to a wide electromagnetic radiation spectrum, depending on the crystal structure of the carbon layer.

The metal-carbon junction is preferably obtained by depositing an amorphous carbon layer 11 on the metal layer 12 by chemical vapour deposition. Preferably, a mixture of hydrogen and methane, for example in a ratio of 12,5:1, is used as reactants. At the beginning of the deposition the surface temperature of the metal layer should be in a range from 15°C to 100°C. For such temperatures, the carbon does not diffuse into the metal and carbides (having high work function, above 6eV) do not form. The thickness of the carbon layer should be preferably from 100nm to 300nm and depends on the time of deposition. Layers thinner than 100nm may show discontinuities and layers thicker than 300nm may exfoliate, which hampers subsequent mounting of electrodes for transmitting currents. Use of the CVD method allows achieving highly homogeneous surface of the carbon layer.

In an exemplary embodiment, a 200nm layer of amorphous carbon, having a band gap of 4 eV, has been deposited on a Cobalt substrate by using as reactants hydrogen and methane in a ratio of 12,5:1 at a rate of 25 cm³/min of hydrogen and 2 cm³/min of methane. The substrate temperature at the beginning of the deposition was 28°C.

Measurements of the photoelectric effect have been performed within visible light range with a use of conventional lamps and within Roentgen radiation range with a use of a standard X-ray Diffractometer (X-Pert) with a cuprum plate (radiation Cu Kα) having a power of 40 kV, 40 mA. The voltage was measured on an open circuit with a voltmeter of a precision 10⁻⁴V.

For visible light the metal-carbon junction did not present any photoelectric effect. For non-visible light, especially X radiation, the photovoltage changed depending on the angle of incidence of the X radiation and showed its highest value when the radiation was perpendicular to the surface of the carbon layer and the lowest value when the radiation was parallel to the surface of the carbon layer.

Fig. 2 presents the dependence of photoelectric effect measured on an open circuit with respect to angle of incidence of the X radiation versus the surface of the carbon layer.

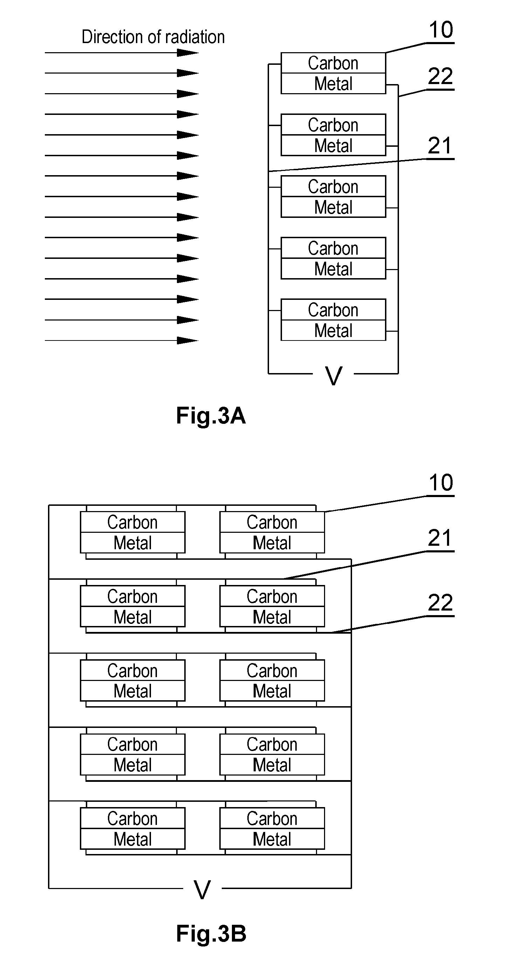

Figs. 3A and 3B show, in a side view and in a front view, respectively, a photosensitive system comprising a plurality of detectors according to the invention connected in parallel. The system is particularly useful for generating energy in response to UV, Gamma and/or X radiation, i.e. radiation with wavelength shorter than visible light. Therefore, the system is particularly useful in cosmic space to generate energy. The system comprises a plurality of detectors 10 connected in parallel, wherein the carbon layers 11 are connected to a first electrode 21 and the metal layers 12 are connected to a second electrode. The detectors 10 can be arranged in a plurality of parallel rows.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

## Claims

1. A radiation detector comprising a metal-carbon junction wherein a layer of carbon (11) is deposited on a layer of metal (12) having a work function higher than the work function of carbon (11), the junction having electrical characteristic of a diode.

2. The detector according to claim 1, wherein the thickness of the layer of carbon (11) is from 100 nm to 300 nm.

3. The detector according to claim 1, wherein the layer of carbon (11) is deposited on the layer of metal (12) by Chemical Vapor Deposition (CVD) method.

4. A photosensitive system comprising a plurality of detectors according to any of claims 1-3 connected in parallel.

5. A method for producing a metal-carbon junction for a radiation detector by depositing a layer of carbon (11) on a layer of metal (12) having a work function higher than the work function of carbon by Chemical Vapor Deposition (CVD) to obtain a junction having electrical characteristic of a diode.

6. The method according to claim 4, wherein a mixture of hydrogen and methane as reactants is used for the CVD deposition.

7. The method according to claim 4, wherein at the beginning of the deposition the surface temperature of the metal layer is in a range from 15°C to 100°C.
